# EUROPÄISCHE PATENTSCHRIFT

(11) **EP 1 686 010 B1**
(45) Veröffentlichungstag und Bekanntmachung des Hinweises auf die Patenterteilung: **17.10.2007**
(21) Anmeldenummer: 06100473.5
(22) Anmeldetag: 17.01.2006
(51) Int. Cl.: B60R 11/02

(54) **Autoradio mit flexibler Bedieneinheit**
Autoradio with flexible control unit.
Autoradio avec unité de commande flexible

(30) Priorität: 31.01.2005 DE 102005004335
(43) Veröffentlichungstag der Anmeldung: 02.08.2006
(73) Patentinhaber: ROBERT BOSCH GMBH, 70442 Stuttgart (DE)
(72) Erfinder: Zwingmann, Stephanie, 30989 Gehrden (DE)

(56) Entgegenhaltungen:
- GB-A- 2 347 301
- US-B1- 6 563 421
- PATENT ABSTRACTS OF JAPAN Bd. 2002, Nr. 10, 10. Oktober 2002 (2002-10-10) & JP 2002 160585 A (AIWA CO LTD), 4. Juni 2002 (2002-06-04)

## Beschreibung

### Stand der Technik

Die Erfindung geht aus von einem Autoradio nach der Gattung des Hauptanspruchs. Es sind bereits Autoradios bekannt, die eine abnehmbare Frontblende aufweisen. Hierbei ist die Frontblende entweder vollständig oder teilweise von einem vorzugsweise in einem Einbauschacht angeordneten Autoradio abnehmbar. Das Abnehmen der Frontblende dient insbesondere dazu, dass das Radio ohne die abgenommene Bedieneinheit für einen Dieb wertlos wird, so dass der Diebstahlsanreiz gesenkt wird. Denn es besteht nach Abnahme der Bedien-Frontblende für einen Dieb kein Anreiz dazu mehr, das Fahrzeug aufzubrechen und das Autoradio aus dem Fahrzeug zu entwenden. Dokument US-6,563,421-B1 offenbart eine solche abnehnbare Bedieneinheit die, in einem Ausführungsbeispiel, mit einem Scharnier vorgesehen ist. Ferner ist es auch bekannt, die abnehmbare Bedieneinheit als Fernbedienung für das Radio zu verwenden. Somit kann von einer beliebigen Stelle im Fahrzeug aus das Autoradio gesteuert werden, z.B. durch den Beifahrer. Den abnehmbaren Bedieneinheiten ist es jedoch gemeinsam, dass sie ein starres Kunststoffgehäuse aufweisen. Wird die Bedieneinheit abgenommen und aus dem Fahrzeug mitgenommen, so muss sie geeignet verstaut werden. Die starre Form kann einerseits hinderlich sein, andererseits kann die Bedieneinheit bei einer unbeabsichtigten Verformung oder bei einem versehentlichen Fallenlassen beschädigt werden. Hierzu ist es bekannt, entsprechende Gehäuse vorzusehen, in denen eine solche Bedieneinheit zum Mitnehmen eingelegt werden kann. Jedoch ist dann gegebenenfalls ein entsprechend noch größer als die Bedieneinheit selbst ausgeführtes Gehäuse mitzuführen, damit der Diebstahlschutz gewährleistet ist.

### Vorteile der Erfindung

Das erfmdungsgemäße Autoradio mit den Merkmalen des Hauptanspruchs hat demgegenüber den Vorteil, dass die abnehmbare Bedieneinheit biegsam ausgeführt ist. Hierdurch kann eine Beschädigung, sollte die Bedieneinheit einmal unabsichtlich hinfallen, vermieden werden. Denn durch die elastische Verformbarkeit, die mit der Biegsamkeit einhergeht, ist eine Beschädigung durch ein Fallenlassen nahezu ausgeschlossen. Zudem wird das Mitführen der Bedieneinheit vereinfacht. Im Gegensatz zu einem starren Kunststoffkörper, der z.B. in einer Jackentasche hinderlich ist, kann sich die biegsame Bedieneinheit an die flexible Form einer Jackentasche leicht anpassen. Zumindest fühlt ein Träger keinen störenden Gegenstand in der Tasche. Ist z.B. eine Taschengröße begrenzt, so kann durch ein Verbiegen der Bedieneinheit diese an die zur Verfiigung stehende Taschengröße angepasst werden. Insgesamt wird hiermit das Mitführen der Bedieneinheit bequemer und sicherer. Damit steigt die Bereitschaft, die Bedieneinheit auch tatsächlich aus dem Auto zu entnehmen, so dass der gewünschte Effekt, die Verminderung eines Diebstahlanreizes, ohne eine Belastung für den Benutzer erreicht wird.

Durch die in den Unteransprüchen aufgeführten Maßnahmen sind vorteilhafte Weiterbildungen und Verbesserungen des im Hauptanspruch angegebenen Autoradios möglich. Besonders vorteilhaft ist, an der Gehäuseeinrichtung Halteelemente zum Halten der biegsamen Bedieneinheit anzuordnen. Hierdurch kann die Bedieneinheit leicht an dem Gehäuse des Autoradios befestigt werden. Insbesondere ist es hierbei vorteilhaft, eine Halterung magnetisch, insbesondere mittels wenigstens einer Magnetfolie zu gewährleisten, da hierdurch nicht nur eine einfache Befestigung, sondern auch ein leichtes, verschleißfreies Herauslösen der Bedieneinheit von der Gehäuseeinrichtung ermöglicht wird.

Es ist ferner vorteilhaft, an der Bedieneinheit Tasten vorzusehen, die mit einem Tastenstößel so verbunden sind, dass bei einer Betätigung der Taste ein in einer zugeordneten Gehäuseöffnung vorgesehener Schaltkontakt ausgelöst wird. Die Bedieneinheit dient somit als ein geeigneter Überträger, um eine auf eine Taste wirkende Kraft auf einen entsprechenden Schaltkontakt an der Gehäuseeinrichtung des Autoradios zu übertragen. Hierdurch kann im Wesentlichen auf eine elektronische Auswerteeinrichtung innerhalb der Bedieneinheit verzichtet werden, so dass die Bedieneinheit unempfindlicher gegenüber äußeren Einflüssen wird. Wenn auf elektronische Bauteile verzichtet wird, so wird die Bedieneinheit im Allgemeinen auch dann nicht beschädigt, wenn sie mit Wasser in Kontakt kommt. Eine einfache Betätigung wird dabei insbesondere durch eine Folientastatur erreicht.

Ferner ist es vorteilhaft, an der Gehäuseeinrichtung eine Anzeige vorzusehen, die von der Bedieneinheit mit einem zu der Anzeige korrespondierenden Fenster überdeckt wird. Somit muss eine Anzeige ebenfalls nicht mitgeführt werden. Diese kann vielmehr an der Gehäuseeinrichtung verbleiben. Ferner ist es vorteilhaft, die Trägerplatte für die Bedieneinheit schwenkbar zu lagern. Insbesondere kann hierdurch ein Zugriff auf ein hinter der Trägerplatte befmdliches Datenträgerlaufwerk auf einfache Weise erfolgen.

Es ist ferner vorteilhaft, dass das Autoradio nur mit einer an dem Autoradio angeordneten Bedieneinheit betreibbar ist. Hierdurch wird der Diebstahlsanreiz weiter gesenkt, da das Autoradio ohne die Bedieneinheit wertlos wird. Bevorzugt ist eine geeignete Identifizierung gegenüber dem Autoradio an der Bedieneinheit vorgesehen.

Besonders leicht kann die Bedieneinheit dann transportiert werden, wenn sie aufgerollt oder gebogen werden kann.

Es ist ferner vorteilhaft, an der Bedieneinheit wenigstens eine Grifflasche zum Abziehen der Bedieneinheit von der Gehäuseeinrichtung und zum Befestigen an der Gehäuseeinrichtung anzuformen. Hierdurch werden das Anbringen und das Entfernen der Bedieneinheit erleichtert.

### Zeichnung

Ausführungsbeispiele der Erfindung sind in der Zeichnung dargestellt und in der nachfolgenden Beschreibung näher erläutert.

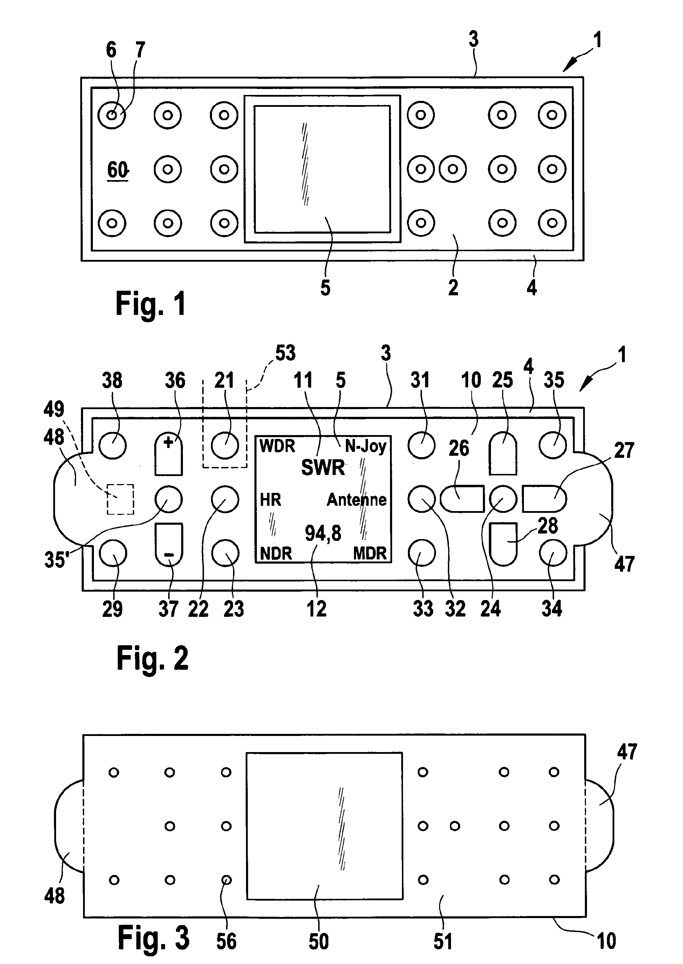

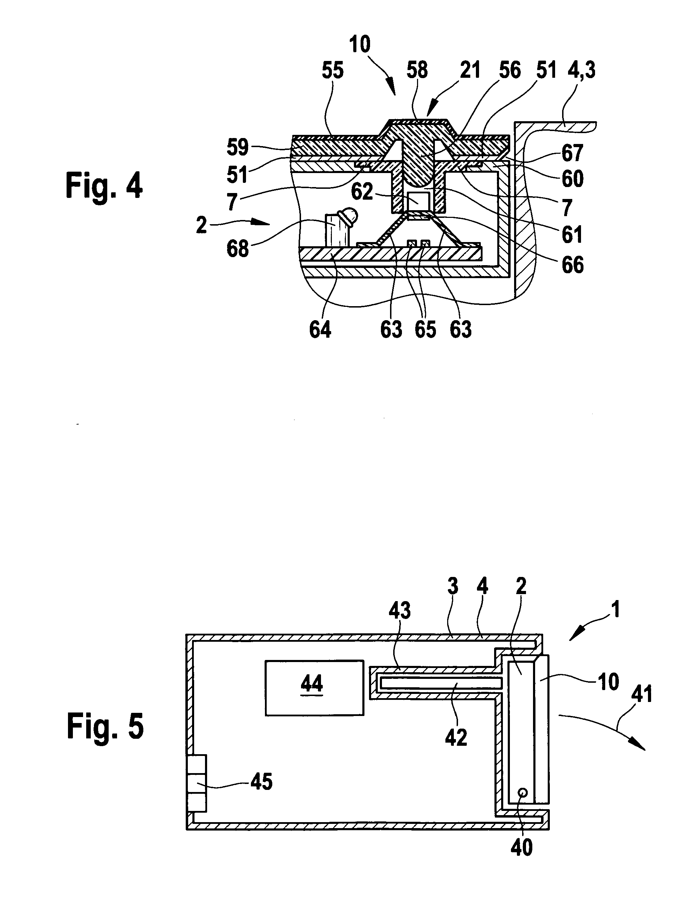

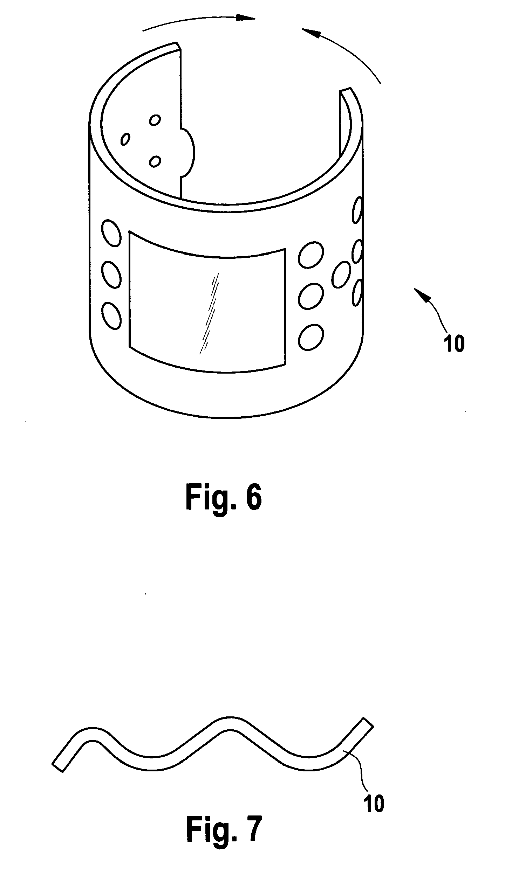

Figur 1 zeigt eine Gehäuseeinrichtung eines erfindungsgemäßen Autoradios zur Aufnahme einer Bedieneinheit, Figur 2 zeigt das erfmdungsgemäße Autoradio mit der aufgesetzten Bedieneinheit, Figur 3 die Bedieneinheit von der Rückseite, Figur 4 eine Taste der Bedieneinheit in einem Querschnitt, Figur 5 das erfindungsgemäße Autoradio in einem seitlichen Querschnitt, Figur 6 ein Beispiel für ein Zusammenrollen der Bedieneinheit, Figur 7 ein Beispiel für ein Verbiegen der Bedieneinheit.

### Beschreibung des Ausführungsbeispiels

Die vorliegende Erfindung bezieht sich auf ein Autoradio insbesondere in einem Kraftfahrzeug. Das Autoradio soll in dem hier beschriebenen Ausführungsbeispiel auf die Wiedergabe von empfangenen Radioprogrammen und CD-Wiedergabe beschränkt sein. Gegebenenfalls können aber auch weitere Kommunikations- und/oder Fahrzeugfunktionen integriert werden.

Das Autoradio ist im Allgemeinen in einem genormten Einbauschacht im Fahrzeug eingebaut. Es können jedoch auch beliebige andere Ausführungen des Einbaus eines Autoradios vorgegeben sein. Dabei kann die Bedieneinheit sowohl das gesamte Autoradio, aber auch nur einen Teil des Autoradios überdecken. Im folgenden Ausführungsbeispiel ist die vorliegende Erfindung am Beispiel eines Autoradios in einem sogenannten 1-DIN Einbauschacht erläutert, wobei die Oberfläche eines Gehäuses des Autoradios bis auf einen Montagerand von einer biegsamen Bedieneinheit überdeckt wird.

In der Figur 1 ist eine Aufsicht auf ein erfindungsgemäßes Autoradio 1 gezeigt, von dem eine biegsame, flexible Bedieneinheit abgenommen wurde. Das Autoradio 1 weist eine Gehäuse 3 mit einem Gehäuserahmen 4 auf, der eine Trägerplatte 2 umgibt. Die Trägerplatte 2 ist diejenige Gehäuseeinrichtung, auf die die Bedieneinheit aufgesetzt wird. In der Mitte der Trägerplatte 2 ist eine Anzeige 5 eingelassen, die vorzugsweise als eine Flüssigkristallanzeige oder als eine elektrolumineszierende Anzeige ausgeführt ist. In die Oberfläche der Trägerplatte 2 sind einzelne Öffnungen für Schaltkontakte 6 eingelassen. Die Schaltkontakte 6 sind dabei so angeordnet, dass sie mit entsprechenden Bedienelementen der Bedienfolie korrespondieren. Die Öffnungen der Schaltkontakte 6 sind jeweils von einem transparenten Kunststoffring 7 umgeben. Die transparenten Kunststoffringe dienen dazu, ein darüber angeordnetes Bedienelement der Bedieneinheit zu beleuchten. Hierzu sind in der Trägerplatte 2 in der Figur 1 nicht dargestellte Lichtquellen angeordnet. Aus Gründen der Übersichtlichkeit der Zeichnung ist lediglich einer der Schaltkontakte und einer der transparenten Kunststoffringe in der Figur 1 mit einem Bezugszeichen versehen.

Der Schaltkontakt 6 ist bevorzugt vertieft gegenüber der Oberfläche der Trägerplatte 2 ausgeführt, so dass ein Auslösen des Schaltkontaktes 6 durch einen Benutzer ohne die aufgesetzte Bedieneinheit nicht oder nur mit Aufwand und Hilfsmitteln erfolgen könnte. Eine Deckschicht 60 der Trägerplatte 2 ist mit einer Eisenlegierung versehen, die für eine magnetische Anziehung empfänglich ist, sodass eine Bedieneinheit, die ein magnetisches Halteelement aufweist, an der Deckschicht haftet. Jedoch sind in weiteren Ausführungsformen auch andere Befestigungsarten möglich. So kann z.B. an dem Autoradio ein Klemmrahmen oder einzelne Klammern oder Rasthaken angeformt sein, mit dem die Bedieneinheit 10 an dem Autoradio 1 verklemmt oder verrastet wird.

In der Figur 2 ist die Bedieneinheit 10 auf die Trägerplatte 2 des Autoradios 1 aufgesetzt. Danach kann das Autoradio 1 eingeschaltet werden. In der Anzeige 5 sind z.B. der Name 11 eines eingestellten Senders, seine Frequenz 12 sowie weitere gespeicherte Radiosender darstellt. In einer bevorzugten Ausführungsform sind links und rechts der Anzeige 5 Folientasten angeordnet, die als Stationstasten zu Radiostationen in der Anzeige 5 korrespondieren. In dem hier gezeigten Ausführungsbeispiel ist z.B. einer ersten Taste 21 an einer oberen linken Seite der Anzeige 5 ein weiterer Radiosender mit der Bezeichnung "WDR" zugeordnet. Einer zweiten, darunter befindlichen Taste 22 ist ein Sender mit der Bezeichnung "HR" zugeordnet. Einer dritten, an der unteren linken Seite der Anzeige 5 befmdlichen dritten Taste 23 ist ein Sendername "NDR" zugeordnet. Der Taste 31 ist der Sender "N-Joy", der Taste 32 der Sender "Antenne" und der Taste 33 der Sender "MDR" zugewiesen. Mit einer der sechs Tasten 21, 22, 23, 31, 32 und 33 kann somit jeweils ein anderer Sender aufgerufen werden.

Weitere Funktionen, aber auch Benutzereinstellungen des Autoradios können über eine Menüauswahl aufgerufen werden, die in der Anzeige 5 dargestellt wird. Hierzu ist eine Menütaste 24 vorgesehen, die in der Mitte von vier Pfeiltasten angeordnet ist: Pfeil nach oben 25, Pfeil nach links 26, Pfeil nach rechts 27 und Pfeil nach unten 28. Mit einem Drücken der Menütaste 24 wird eine Menüstruktur in der Anzeige 5 aufgerufen. Mittels der Pfeiltasten können einzelne Menüpunkte ausgewählt und z.B. durch ein erneutes Betätigen der Pfeiltaste 27 bestätigt werden. Weitere Funktionen, wie z.B. eine Verkehrsfunkfunlction, eine Quellenwahlfunktion zur Auswahl verschiedener Audioquellen oder zur Wahl eines gewünschten Frequenzbereiches können über weitere Bedientasten 29, 34, 35 erfolgen. Auch ein Ein- und Ausschalten des Autoradios erfolgt über eine gesonderte Taste 35', die bevorzugt zwischen einer z.B. mit einem Pluszeichen versehenen Taste 36 zur Erhöhung der Lautstärke einer Audioausgabe und einer z.B. mit einem Minuszeichen versehenen Taste 37 zur Verringerung der Lautstärke einer Audioausgabe angeordnet ist.

Über eine Öffnungstaste 38 kann die Trägerplatte 2 zusammen mit der Bedieneinheit 10 verkippt werden, so dass ein hinter der Trägerplatte 2 angeordnetes Datenträgerlaufwerk zugänglich wird. Diese Funktion ist in der Figur 5 dargestellt. Die Trägerplatte 2 ist um eine Achse 40 drehbar, so dass die Trägerplatte 2 zusammen mit der Bedieneinheit 10 in Pfeilrichtung 41 nach vorne klappt. Damit kann ein Datenträger 42 aus dem Datenträgerlaufwerk 43 entnommen werden. Danach kann die Trägerplatte 2 zusammen mit der Bedieneinheit 10 wieder vor das Datenträgerlaufwerk 43 geklappt werden. Schematisch sind ferner in der Figur 5 noch ein Empfangstuner 44 zum Empfangen eines Radioprogramms und eine Anschlussschnittstelle 45 dargestellt, über die das Autoradio mit weiteren Fahrzeugsystemen, mit einer Spannungsversorgung und mit einer Antenne verbunden ist.

Ferner sind seitlich an der biegsamen Bedieneinheit 10 links und rechts Laschen 47, 48 angeformt. Die Laschen 47, 48 ragen bevorzugt über den Rahmen 4 des Autoradios 1 geringfügig hinaus und sind nach außen hin etwas dünner ausgeführt, so dass die Laschen 47, 48 von einem Benutzer bequem hochgehoben werden können und die Bedieneinheit 10 bei einem Ziehen an einer der Laschen leicht von der Trägerplatte 2 abgenommen werden kann. Bevorzugt ist das Autoradio 1 dabei so betrieben, dass nach einem Abnehmen der Bedieneinheit 10 das Autoradio 1 automatisch deaktiviert wird.

Um zu verhindern, dass eine gefälschte oder gegebenenfalls aus einem anderen Fahrzeug gestohlene Bedieneinheit 10 mit einem nicht zugehörigen Autoradio betrieben wird, ist in einer bevorzugten Ausgestaltung in die Bedieneinheit 10 ein Mikrochip 49 eingelassen, in dem ein Code für die Bedieneinheit 10 und für das Autoradio gespeichert ist. In die Trägerplatte 2 sind bevorzugt Mittel in der Figur nicht gezeigte Mittel zum Auslesen des Codes von dem Mikrochip 49 vorgesehen, bei denen bevorzugt ähnlich anderer Chipkarten-Identifikationssysteme eine berührungslose Kommunikation erfolgt. Ist die Identifikation erfolgreich, kann das Radio betrieben werden. Ist die Identifikation nicht erfolgreich, ist ein Radiobetrieb nicht möglich.

In der Figur 3 ist eine Ansicht der biegsamen Bedieneinheit 10 von der Rückseite dargestellt. Die Bedieneinheit 10 weist ein Fenster 50 auf, das einen Blick auf die Anzeige 5 auf der Trägerplatte 2 zulässt. Auf der Rückseite der Bedieneinheit 10 ist eine Magnetfolie 51 vorgesehen, die die Rückseite bis auf die Laschen 47, 48 vollständig oder zumindest in weiten Teilen überdeckt. Die Magnetfolie 51 besteht aus einem magnetischen Material, das in Folienform auf ein Trägermaterial der Bedieneinheit 10 aufgebracht ist. Wird die Bedieneinheit 10 auf die Trägerplatte 2 aufgelegt, so haftet die Magnetfolie 51 auf der Trägerplatte 2 aufgrund der magnetischen Anziehung zu der eisenhaltigen Deckschicht 60. Die Trägerplatte 2 weist Öffnungen für Tastenstößel 56 auf, die bei einer Betätigung einer der Tasten an der Vorderseite der Bedieneinheit so bewegt werden, dass sie einen der Schaltkontakte 6 der Trägerplatte 2 auslösen und damit die der Taste zugeordnete Funktion auslösen.

In der Figur 4 ist die Funktionsweise einer derartigen Taste am Beispiel der Taste 21 entsprechend dem Ausschnitt 53 in der Figur 2 im Querschnitt dargestellt. Die Trägerplatte 2 ist gegenüber dem Gehäuserahmen 4 derart vertieft angeordnet, dass sie die Bedieneinheit 10 so aufnimmt, dass eine Oberfläche der Bedieneinheit 10 ungefähr bündig mit dem Rahmen 4 des Gehäuses 3 abschließt. Die Bedieneinheit 10 weist einen Trägerbereich 59 auf, der an seiner der Trägerplatte 2 abgewandten Oberfläche lackiert wurde, so dass eine vorzugsweise lichtundurchlässige Deckschicht 55 gebildet wird. Der Trägerbereich 59 besteht vorzugsweise aus einem Elastomer oder aus einem Polymerschaum. Es kann auch ein anderes einerseits reißfestes, andererseits aber auch hoch elastisches Material verwendet werden. Bevorzugt wird das Material des Trägerbereichs 59 eingefärbt.

Die Deckschicht 55 wird in einem Tastenbereich 58 vorzugsweise mittels Laserabtragung partiell entfernt, so dass der nun freie Bereich eine Textbezeichnung oder eine Symboldarstellung zur Funktionsbezeichnung der Taste ergibt. Der Trägerbereich 59 ist dabei bevorzugt derart lichtdurchlässig ausgeführt, dass er Licht zur Beleuchtung seiner Beschriftung durchlässt. Das für die Beleuchtung erforderliche Licht wird von einer Lichtquelle 68 erzeugt und über den transparenten Kunststoffring 7 zur Durchleuchtung des Tastenbereichs 58 umgelenkt. Die Lichtquelle 68, die insbesondere als eine Leuchtdiode ausgeführt ist, wird hierzu an einer Leiterplatte 64 innerhalb der Trägerplatte 2 angeordnet. Ein Benutzer kann nun insbesondere bei Nacht die in den Tastenbereich 58 in die Deckschicht eingebrachte Beschriftung erkennen.
Die Tastenstößel 56 sind bevorzugt so auszulegen, dass sie möglichst bündig mit dem sie umgebenden Trägerbereich 59 abschließen. Hierdurch kann vermieden werden, dass Staub oder Schmutz an der Öffnung für den Stößel in die Trägerplatte 2 eindringen kann. Die Folie 55 ist bevorzugt abwaschbar ausgeführt, so dass Verschmutzungen der Bedieneinheit 10 leicht entfernt werden können.

Die Deckschicht 55 sowie der Trägerbereich 59 sind derart elastisch ausgeführt, dass bei einem Druck auf die Taste 21 ein darunter befmdlicher Tastenstößel 56 bewegt werden kann, ohne dass die Taste 21 beschädigt wird. Die Taste 21 ist dabei bevorzugt so ausgeführt, dass bei einer Bewegung des Tastenstößel 56 die elastische Verformung der Taste 21 dazu führt, dass von der verformten Taste 21 eine Rückstellkraft auf den Tastenstößel 56 ausgeübt wird, so dass die Taste 21 wieder in ihre ursprüngliche Lage zurückgeführt wird.

Die Öffnung 61 zur Aufnahme des Tastenstößels 56 wird von dem transparenten Kunststoffring 7 umgeben, um den Tastenstößel 56 zu führen. Die Tastenstößel 56 sind bevorzugt ebenfalls aus dem gleichen Material ausgeführt, wie der Trägerbereich 59. Dieses Material ist stabil genug, um eine sichere Führung des Tastenstößels und eine Kraftübertragung auf den Schaltkontakt zu gewährleisten. Die Flexibilität und die Elastizität der Bedieneinheit 10 kann hierbei durch die Auswahl des Trägermaterials verändert werden. Der Tastenstößel 56 bewegt bei einer Betätigung in Druckrichtung ein Schaltelement 62 des Schaltkontaktes 6 auf. Das Schaltelement 62 wird von einem Kegel aus einer elastischen Schicht 63 gehalten. Diese kegelförmige elastische Schicht 63 ist an ihrem Fuß an der Leiterplatte 64 angeordnet bzw. befestigt. Die Leiterplatte 64 weist elektrische Kontakte 65 im inneren des Kegels auf. Die elektrischen Kontakte 65 werden von einer der Leiterplatte 64 zugewandten, an dem Schaltelement 62 angeordnete leitende Schicht 66 dann geschlossen wird, wenn das Schaltelement 62 durch den Taststößel 56 auf die elektrischen Kontakte 65 bewegt wird. Der Schaltkontakt 62 wird somit ausgelöst. Die kegelförmige elastische Schicht 63 sorgt dafür, dass nach Loslassen der Taste 21 ein Gegendruck aufgebaut wird, so dass sich das Schaltelement 62 dann wieder von den elektrischen Kontakten 65 löst. Durch auf der Leiterplatte 64 angeordnete, in der Figur 4 jedoch nicht dargestellte Leiterbahnen wird das Schließen des elektrischen Kontakts von einer nicht gezeigten Auswerteeinheit erfasst und weiterverarbeitet. Damit kann eine Betätigung der Taste 21 ermittelt werden.

Auf der Trägerplatte 2 ist eine gegebenenfalls lackierte Deckschicht 60 in Form einer Metallschicht aufgebracht, die eine sichere magnetische Haftung der Bedieneinheit 10 gewährleistet. Eine Fehlanordnung der Bedieneinheit 10 wird dadurch vermieden, dass eine Betätigung der Schaltkontakte nur bei einer korrekten Anordnung der Bedieneinheit 10 auf der Trägerplatte 2 ermöglicht wird. Zum leichteren Anbringen der Bedieneinheit 10 ist die Bedieneinheit 10 zumindest an ihrem Rand an den unteren Ecken angeschrägt, wie dies aus der fehlenden Ecke 67 erkenntlich ist.

Die Bedieneinheit 10 ist bevorzugt so flexibel ausgeführt, dass sie längs eingerollt werden kann, wie dies aus der Figur 6 ersichtlich ist. Durch ein geeignetes Befestigungsmittel, z.B. ein Gummiband kann die Bedieneinheit 10 in der entsprechenden Position gehalten werden. Ferner kann die Bedieneinheit 10 bevorzugt auch wellig verformt werden, wie dies aus der Figur 7 ersichtlich ist.

Anstelle der anhand der Figur 4 erläuterten, aus der Bedieneinheit 10 herausragenden Tastenstößel 56 ist es auch möglich, die Tastenstößel so verkürzt auszuführen, dass sie mit der Magnetfolie 51 abschließen oder sogar in die Bedieneinheit 10 hinein versenkt sind. In diesem Fall ist das Schaltelement 62 in Richtung des Taststößels so zu verlängern, dass es aus der Trägerplatte 2 hinausragt. Die Betätigung entspricht dann der Bedienung anhand der Figur 4, wobei die Tastenstößel nicht über die der Trägerplatte zugewandte Oberfläche der Bedieneinheit 10 hinausragen.

## Patentansprüche

1. Autoradio mit einer Gehäuseeinrichtung (2, 3) und mit einer von der Gehäuseeinrichtung (2, 3) abnehmbaren Bedieneinheit (10), **dadurch gekennzeichnet, daß** die Bedieneinheit (10) biegsam ist.

2. Autoradio nach einem der vorherigen Ansprüche, **dadurch gekennzeichnet, dass** an der Gehäuseeinrichtung (2) und/oder der Bedieneinheit (10) wenigstens ein Halteelement (51, 60) zum Halten der biegsamen Bedieneinheit (10) angeordnet sind.

3. Autoradio nach Anspruch 2, **dadurch gekennzeichnet, dass** wenigstens eines der Halteelemente (51, 60) die biegsame Bedieneinheit (10) magnetisch an der Gehäuseeinrichtung (2) hält.

4. Autoradio nach Anspruch 3, **dadurch gekennzeichnet, dass** die Bedieneinheit (10) zum Halten an der Gehäuseeinrichtung (2) eine Magnetfolie (51) aufweist.

5. Autoradio nach einem der vorherigen Ansprüche, **dadurch gekennzeichnet, dass** an der Bedieneinheit (10) wenigstens eine Taste (21) angeordnet ist, dass die Taste (21) mit einem Tastenstößel (56) derart verbunden ist, dass bei einer Betätigung der Taste (21) der Tastenstößel (56) einen an der Gehäuseeinrichtung (2) angeordneten Schaltkontakt (6, 65) auslöst.

6. Autoradio nach einem der vorherigen Ansprüche, **dadurch gekennzeichnet, dass** die Bedieneinheit (10) eine Folientastatur aufweist.

7. Autoradio nach einem der vorherigen Ansprüche, **dadurch gekennzeichnet, dass** an der Gehäuseeinrichtung (2, 3) eine Anzeige (5) angeordnet ist und dass die Bedieneinheit (10) ein mit der Anzeige (5) sich überdeckendes Fenster (50) aufweist.

8. Autoradio nach einem der vorherigen Ansprüche, **dadurch gekennzeichnet, dass** die Bedieneinheit (10) von einer Trägerplatte (2) gehalten wird und dass die Trägerplatte (2) verschwenkbar so gelagert ist, dass nach einem Verschwenken eine Öffnung eines Datenträgerlaufwerks (43) freigegeben wird.

9. Autoradio nach einem der vorherigen Ansprüche, **dadurch gekennzeichnet, dass** das Autoradio (1) nur mit einer angeordneten Bedieneinheit (10) betreibbar ist.

10. Autoradio nach einem der vorherigen Ansprüche, **dadurch gekennzeichnet, dass** die Bedieneinheit (10) aufrollbar und/oder wellbar ist.

11. Autoradio nach einem der vorherigen Ansprüche, **dadurch gekennzeichnet, dass** an die Bedieneinheit (10) wenigstens eine Grifflasche (47, 48) zum Abziehen der Bedieneinheit (10) von der Gehäuseeinrichtung (2) oder zum Anbringen der Bedieneinheit (10) an der Gehäuseeinrichtung (2) angeformt ist.

## Claims

1. Car radio having a housing device (2, 3) and having an operator control unit (10) which can be removed from the housing device (2, 3), **characterized in that** the operator control unit (10) is flexible.

2. Car radio according to the preceding claim, **characterized in that** the housing device (2) and/or the operator control unit (10) has/have at least one holding element (51, 60) arranged on it/them for holding the flexible operator control unit (10).

3. Car radio according to Claim 2, **characterized in that** at least one of the holding elements (51, 60) holds the flexible operator control unit (10) on the housing device (2) magnetically.

4. Car radio according to Claim 3, **characterized in that** the operator control unit (10) has a magnetic foil (51) for holding it on the housing device (2).

5. Car radio according to one of the preceding claims, **characterized in that** the operator control unit (10) has at least one key (21) arranged on it, **in that** the key (21) is connected to a key plunger (56) such that when the key (21) is operated the key plunger (56) trips a switching contact (60, 65) arranged on the housing device (2).

6. Car radio according to one of the preceding claims, **characterized in that** the operator control unit (10) has a membrane keypad.

7. Car radio according to one of the preceding claims, **characterized in that** the housing device (2, 3) has a display (5) arranged on it, and **in that** the operator control unit (10) has a window (50) covered by the display (5).

8. Car radio according to one of the preceding claims, **characterized in that** the operator control unit (10) is held by a support plate (2), and **in that** the support plate (2) is pivotably mounted such that after pivoting an opening in a data storage medium drive (43) is cleared.

9. Car radio according to one of the preceding claims, **characterized in that** the car radio (1) can be operated just with an operator control unit (10) set up.

10. Car radio according to one of the preceding claims, **characterized in that** the operator control unit (10) can be rolled up and/or corrugated.

11. Car radio according to one of the preceding claims, **characterized in that** the operator control unit (10) has at least one grip (47, 48) integrally formed on it for withdrawing the operator control unit (10) from the housing device (2) or for fitting the operator control unit (10) on the housing device (2).

## Revendications

1. Autoradio comportant une installation de boîtier (2, 3) et une unité de commande (10) amovible de l'installation de boîtier (2, 3),
**caractérisé en ce que**
l'unité de commande (10) est souple.

2. Autoradio selon la revendication 1,
**caractérisé en ce que**
l'installation de boîtier (2) et/ou l'unité de commande (10) comportent au moins un élément de fixation (51, 60) pour fixer l'unité de commande souple (10) .

3. Autoradio selon la revendication 2,
**caractérisé en ce qu'**
au moins l'un des éléments de fixation (51, 60) maintient l'unité de commande souple (10) de manière magnétique à l'installation de boîtier (2).

4. Autoradio selon la revendication 3,
**caractérisé en ce que**
l'unité de commande (10) comporte un film magnétique (51) pour être fixé à l'installation de boîtier (2).

5. Autoradio selon l'une quelconque des revendications précédentes,
**caractérisé en ce que**
l'unité de commande (10) comporte au moins une touche (21) reliée à une touche poussoir (56) de façon qu'en actionnant la touche (21), le poussoir (56) déclenche un contact de commutation (6, 65) de l'installation de boîtier (2).

6. Autoradio selon l'une quelconque des revendications précédentes,
**caractérisé en ce que**
l'unité de commande (10) comporte un clavier en forme de film.

7. Autoradio selon l'une quelconque des revendications précédentes,
**caractérisé en ce que**
l'installation de boîtier (2, 3) comporte un afficheur (5) et l'unité de commande (10) est munie d'une fenêtre (50) correspondant à l'afficheur (5).

8. Autoradio selon l'une quelconque des revendications précédentes,
**caractérisé en ce que**
l'unité de commande (10) est tenue par une plaque de support (2) pivotante de façon qu'après un basculement, on libère une ouverture d'un lecteur de support de données (43).

9. Autoradio selon l'une quelconque des revendications précédentes,
**caractérisé en ce que**
l'autoradio (1) ne peut fonctionner qu'avec une unité de commande (10) installée.

10. Autoradio selon l'une quelconque des revendications précédentes,
**caractérisé en ce que**
l'unité de commande (10) peut être enroulée et/ou ondulée.

11. Autoradio selon l'une quelconque des revendications précédentes,
**caractérisé en ce que**
l'unité de commande (10) comporte au moins une patte de préhension (47, 48) pour extraire l'unité de commande (10) de l'installation de boîtier (2) ou pour placer l'unité de commande (10) dans l'installation de boîtier (2).
